# EUROPÄISCHE PATENTANMELDUNG

(11) **EP 1 965 244 A2**
(43) Veröffentlichungstag der Anmeldung: **03.09.2008**
(21) Anmeldenummer: 08151750.0
(22) Anmeldetag: 21.02.2008
(51) Int. Cl.: G02B 27/14

(54) **Optische Anordnung und optisches Verfahren**

(30) Priorität: 28.02.2007 DE 102007009820
(71) Anmelder: OSRAM Opto Semiconductors GmbH, 93055 Regensburg (DE)
(72) Erfinder: Lell, Alfred, 93142, Maxhütte-Haidhof (DE); Strauß, Uwe, 93077, Bad Abbach (DE); Stath, Norbert, 93049, Regensburg (DE); Ott, Hubert, 93077, Bad Abbach (DE); Härle, Volker, 93164, Laaber (DE)
(74) Vertreter: Epping - Hermann - Fischer

(57) **Zusammenfassung**

Die Erfindung betrifft eine optische Anordnung, mit zumindest einem ersten lichtemittierenden Element (LE1) und einem zweiten lichtemittierenden Element (LE2), mit zumindest einer Lichtadditionsvorrichtung (1) derart angeordnet, dass das Licht des ersten und des zweiten lichtemittierenden Elementes (LE1,LE2) zu einem Lichtstrahl addiert wird.

Weiter betrifft die Erfindung ein optisches Verfahren, bei dem Licht eines ersten lichtemittierenden Elements (LE1) mit dem Licht eines zweiten lichtemittierenden Elements (LE2) zu einem Lichtstrahl addiert wird.

## Beschreibung

Die Erfindung betrifft eine optische Anordnung und ein optisches Verfahren.

Lichtquellen mit hoher Lichtintensität, hoher Lichtdichte beziehungsweise hoher Leuchtdichte finden in verschiedenen Bereichen des täglichen Lebens ihre Anwendung. Beispielhaft seien hier Lichtquellen für Leselampen, für Endoskopie oder für Mikroskopie genannt. Weitere Anwendungen, ebenfalls aus dem Bereich des täglichen Lebens betreffen Projektionsanwendungen wie zum Beispiel Beamer oder Displays bei denen auch stark fokussierte Lichtquellen hoher Leuchtdichte zur Darstellung einzelner Bildpixel von Bedeutung sind. Auch in der Materialbearbeitung finden stark fokussierte Lichtquellen mit hohen Leuchtdichten ihre Verwendung. So zum Beispiel beim Schweißen, Gravieren oder Schneiden von Werkstücken.

Insbesondere die letztgenannte Anwendung ist bisher nur mit stark fokussierten Lichtquellen sehr hoher Leuchtdichte möglich. Wobei sehr hohe Leuchtdichten bislang nur durch Laserlichtquellen erreichbar sind.

Zur Erzeugung von stark fokussierten Lichtquellen finden bislang Parabolspiegel oder Linsen Verwendung. Dies ist zum Beispiel in der Druckschrift "Trichroic prism assembly for separating and recombining colors in a compact projection display", Hoi-Sing Kwok et al. gezeigt. Derartige optische Vorrichtungen haben als Lichtquelle eine relativ große Abmessung und führen zu Lichtquellen, deren Ausdehnung zumindest 1 mm oder mehr beträgt. Weiter sind die von solchen Lichtquellen emittierten Lichtstrahlen nicht parallel zueinander, sondern folgen mehr einem sternförmigen Verlauf.

Bei Bildprojektionen, welche aus einzelnen Bildpixeln gebildete Gesamtbilder darstellen, ist die flächige Ausdehnung eines einzelnen Pixels für die optische Qualität der Abbildung von entscheidender Bedeutung. Je kleiner die flächige Ausdehnung eines einzelnen Bildpixels, umso besser wird die optische Qualität der Abbildung empfunden. Nicht allein die flächige Ausdehnung des Bildpunktes aber ist dabei von Bedeutung, auch die Helligkeit des einzelnen Bildpunktes geht in das Qualitätsempfinden der Abbildung ein. Schwache Lichtquellen haben gegenüber einer leuchtstarken Lichtquelle ein als matt und kontrastarm empfundenes Bild zur Folge.

Es ist demzufolge die Aufgabe der Erfindung, eine Lösung anzubieten, die es ermöglicht, hohe Abbildungsqualität bei gleich bleibender Leuchtdichte zu erzielen.

Dadurch, dass ein erstes lichtemittierendes Element und ein zweites lichtemittierendes Element vorgesehen ist, wobei deren einzelne Lichtstrahlen zu einem gemeinsamen Lichtstrahl additiv zusammengefasst werden, ergibt sich eine Gesamtleuchtdichte, welche höher ist als jede der Einzelleuchtdichten des ersten oder zweiten lichtemittierenden Elements. Mittels einer Lichtadditionsvorrichtung, welche derart angeordnet ist, dass die aus voneinander abweichenden Richtungen kommenden Einzellichtstrahlen der lichtemittierenden Elemente zu einem gemeinsamen Lichtstrahl zusammengeführt werden, erfolgt die Addition der Leuchtdichten. Durch diese Maßnahme erhöht sich die Gesamtintensität der damit erzeugten Lichtquelle gegenüber den einzelnen Leuchtdichten der lichtemittierenden Elemente.

Gemäß einer Weiterbildung ist vorgesehen, die lichtemittierenden Elemente aus zumindest einer ersten halbleiterbasierten Laserdiode und zumindest einer zweiten halbleiterbasierten Laserdiode zu bilden. Durch diese Maßnahme wird erreicht, dass das emittierte Licht jedes einzelnen lichtemittierenden Elements bereits längsgerichtet in einem parallelen Strahl emittiert wird, womit sich die weitere Addition des emittierenden Lichtes vereinfacht. Zudem weisen halbleiterbasierte Laserdioden eine hohe Ausgangleistung bezogen auf deren lichtemittierende Fläche auf.

Gemäß einer Weiterbildung ist vorgesehen, für das erste und das zweite lichtemittierende Element voneinander abweichende Wellenlängenbereiche des emittierten Lichtes zu wählen. Dadurch wird erreicht, dass mittels einer Addition von verschiedenfarbig emittiertem Licht unterschiedlicher Wellenlängen zweier oder mehrerer Laserdioden durch eine Veränderung der einzelnen Leuchtdichten an den einzelnen Laserdioden eine Veränderung des Farbtones der Lichtquelle erzielbar ist. Mittels der Lichtadditionsvorrichtung lässt sich somit eine Lichtquelle bilden, deren Farbtönung veränderbar ist.

Gemäß einer Weiterbildung ist vorgesehen, in den Strahlengang der optischen Anordnung eine optische Konvertereinrichtung anzuordnen. Die optische Konvertereinrichtung bewirkt eine Änderung, eine Konvertierung der Wellenlängen des durch sie hindurch tretenden Lichtes. Vorzugsweise wird zumindest ein Teil des durchtretenden Lichts derart konvertiert, dass die Wellenlänge des konvertierten Lichts größer ist, als die Wellenlänge des nicht konvertierten Lichts. Beispielsweise handelt es sich beim nicht konvertierten Licht um blaues Licht, beim konvertierten Licht kann es sich dann zum Beispiel um gelbes Licht handeln.

Die Anordnung der optischen Konvertereinrichtung im Strahlengang ist dabei vor der Lichtadditionsvorrichtung oder nach der Lichtadditionsvorrichtung möglich. Das aus der Konvertereinrichtung austretende Licht weist eine von der Wellenlänge des eintretenden Lichts verschiedene Wellenlänge auf. Durch eine Kombination von geeignetem Konvertermaterial und halbleiterbasierten Laserdioden sind auf diese Weise Lichtquellen zu erzeugen, die eine exakt vorbestimmbare Farbtönung aufweisen. Somit sind auch Lichtquellen weißen Lichts mit verschiedenen Farbtemperaturen auf diese Weise erzeugbar.

Gemäß einer Weiterbildung erfolgt die Zuleitung des Lichtes zur optischen Additionsvorrichtung mittels einer optischen Faser. Durch die optische Faser wird erreicht, dass das erste und/oder das zweite lichtemittierende Element an einem anderen Ort als die Lichtadditionsvorrichtung angeordnet sein kann, und mit der optischen Faser das Licht zur Lichtadditionsvorrichtung geleitet wird. Auch eine Ableitung des Lichtes von der optischen Additionsvorrichtung mittels einer optischen Faser ist gemäß dieser Weiterbildung möglich. Damit ist die Bildung der Lichtquelle an einem von der optischen Additionsvorrichtung beabstandeten Ort möglich. Die Konvertereinrichtung ist dabei auch am Ende der optischen Faser und damit am Austrittspunkt des Lichtes anordenbar.

Dies ist dann von Vorteil, wenn aufgrund begrenzter Raumgrößen oder aufgrund gestalterischen, oder anwendungsbedingten Anforderungen einzelne Teilkomponenten an voneinander beabstandeten Orten anzuordnen sind. Ein Beispiel dafür ist im Besonderen die Endoskopie.

Gemäß einer Weiterbildung ist vorgesehen, die Lichtadditionsvorrichtung aus zumindest einem optischen Element zu bilden, welches eine Grenzfläche aufweist, welche derart ausgebildet ist, dass das Licht eines vorbestimmten Wellenbereiches von der Grenzfläche reflektiert wird. Licht außerhalb dieses Wellenlängenbereiches durchdringt die Grenzfläche. Auf diese Weise lässt sich zum Beispiel das Licht von zumindest zwei lichtemittierenden Elementen addieren. Dazu ist das erste lichtemittierende Element in seinem Wellenlängenbereich so ausgelegt, dass das von ihm emittierte Licht die Grenzfläche durchdringt. Das zweite lichtemittierende Element ist so ausgelegt, dass das von ihm emittierte Licht an der Grenzfläche reflektiert wird. Trifft das Licht des ersten lichtemittierenden Elements auf die Grenzfläche, so durchdringt dieses die Grenzfläche und wird dabei nicht oder nur gering abgelenkt, jedoch nicht reflektiert. Trifft das Licht des zweiten lichtemittierenden Elements auf die Grenzfläche, so wird es von der Grenzfläche reflektiert. Durch eine ausgewählte Anordnung der Grenzfläche in Bezug auf die Lage der lichtemittierenden Elemente und deren Ausrichtung, lässt sich somit erreichen, dass das reflektierte Licht des zweiten lichtemittierenden Elements mit dem durch die Grenzfläche hindurch gedrungenen Licht des ersten lichtemittierenden Elements optisch addiert wird.

Gemäß einer Weiterbildung ist die Konvertereinrichtung mit einer Kühlvorrichtung thermisch gekoppelt. Damit wird erreicht, dass eine aufgrund hoher Lichtenergie bei der Konvertierung entstehende Wärme von der Konvertereinrichtung abgeleitet wird und damit eine Beschädigung der Konvertereinrichtung vermieden wird.

Nachfolgend werden Ausführungsbeispiele unter Bezugnahme auf die Zeichnungen näher erläutert. Es zeigen
- Figur 1: ein erstes Ausführungsbeispiel der optischen Anordnung,
- Figur 1A: eine graphische Darstellung der Abhängigkeiten der Reflektionsfähigkeit von den Emissionswellenlängen,
- Figur 2: ein zweites Ausführungsbeispiel der optischen Anordnung,
- Figur 2A: eine graphische Darstellung der Abhängigkeiten der Reflektionsfähigkeit von den Emissionswellenlängen,
- Figur 3 bis Figur: 14 weitere Ausführungsbeispiele der optischen Anordnung.

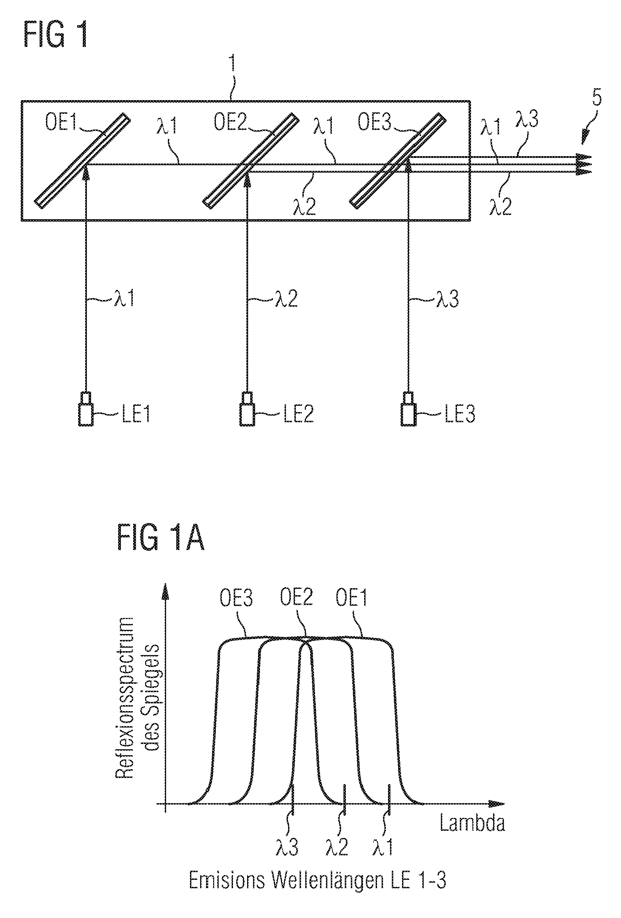

Die Figur 1 zeigt in einer schematischen Darstellung eine Lichtadditionsvorrichtung 1. In die Lichtadditionsvorrichtung 1 wird Licht von drei lichtemittierenden Elementen LE1 bis LE3 eingespeist. LE1 bis LE3 sind in dem Ausführungsbeispiel aus halbleiterbasierten Laserdioden gebildet.

Das von den Laserdioden LE1 bis LE3 emittiere Licht unterscheidet sich jeweils durch dessen Wellenlänge λ. Die Wellenlänge λ eines Lichtes, insbesondere im so genannten sichtbaren Bereich, ist ein Maß für die Farbe des emittierten Lichtes. Die Laserdioden LE1 bis LE3 emittieren voneinander unabhängig Licht der Wellenlänge λ1, λ2 und λ3. Die unterschiedlichen Wellenlängen λ1, λ2 und λ3 des emittierten Lichtes sind auch in der Koordinatendarstellung der Figur 1A mittels einer balkenartigen Markierung an der Abszissenachse (Lambda) dargestellt. Auch sind in der Darstellung der Figuren 1 und 1a den Laserdioden LE1 bis LE3 die Wellenlängen λ1, λ2 und λ3 zugeordnet. Die Lichtadditionsvorrichtung 1 ist gebildet aus optischen Elementen OE1, OE2 und OE3, welche jeweils eine teildurchlässige Spiegeloberfläche aufweisen, welche derart beschaffen ist, dass sie für Wellenlängen eines bestimmten Wellenlängenbereiches hochreflektierend ist. Für Wellenlängen außerhalb dieses Wellenlängenbereiches ist die Oberfläche des optischen Elements transparent.

An Stelle des ersten optischen Elements OE1 ist auch ein kostengünstiger Umlenkspiegel verwendbar, da das optische Element OE1 nur von dem Licht der ersten Laserdiode LE1 beaufschlagt wird. Das optische Element OE1 wird bei dieser Anordnung von keinem Lichtstrahl durchdrungen.

Der umgelenkte Strahl λ1 der ersten Laserdiode LE1 trifft nun in seinem weiteren Strahlenverlauf von einer Rückseite auf das optische Element OE2. Das optische Element OE2 ist ebenso wie das optische Element OE1 und das optische Element OE3 in einem 45° geneigten Winkel zu den eintreffenden Lichtstrahlen λ1, λ2 und λ3 angeordnet. Die eintreffenden Lichtstrahlen λ1, λ2 und λ3 treffen voneinander beabstandet in paralleler Richtung auf die optischen Elemente OE1, OE2 und OE3 auf. Diese Anordnung bewirkt zum einen, dass der von den Laserdioden emittierte Lichtstrahl um 90° an den jeweiligen optischen Elementen umgelenkt und damit reflektiert wird. Zum anderen bewirkt diese Anordnung, dass der von der Rückseite auf das optische Element OE2 treffende Lichtstrahl λ1 dies durchdringt und nicht reflektiert wird. Das optische Element OE2 ist derart ausgebildet, dass es für Lichtstrahlen der Wellenlänge λ2 hochreflektierend ist, die Lichtstrahlen der Wellenlänge λ1 jedoch unreflektiert durchdringen können.

Die mit 45° geneigte Anordnung der optischen Elemente bewirkt somit eine Addition der Lichtstrahlen λ1 und λ2. Im weiteren Strahlenverlauf treffen die Summe der beiden Lichtstrahlen λ1 und λ2 von einer Rückseite auf das dritte optische Element OE3 auf. Das optische Element OE3 ist dabei derart ausgebildet, dass es für die Wellenlängen der Strahlen λ1 oder λ2 transparent wirkt und für die Wellenlängen λ3 der dritten Laserdiode hochreflektierende Eigenschaften aufweist. Demzufolge verlassen die Lichtstrahlen λ1, λ2 und λ3 das optische Element OE3 in gemeinsamer paralleler Richtung und somit die optische Lichtadditionsvorrichtung 1. Damit ist eine Lichtquelle 5 gebildet, welche die Summe aus den Einzellichtstrahlen λ1, λ2 und λ3 umfasst. Damit ist ein Licht erzeugt, dessen Leuchtdichte durch Addition aus den Leuchtdichten der einzelnen Laserdioden LE1, LE2 und LE3 gebildet ist.

Figur 1A zeigt weiter den Zusammenhang zwischen den einzelnen Wellenlängenbereichen λ1, λ2 und λ3 der Laserdioden und zeigt je ein beispielhaftes Reflektionsspektrum der einzelnen optischen Elemente OE1, OE2 und OE3. Demzufolge reflektiert das optische Element OE1 alle Wellenlängen der im dargestellten Ausführungsbeispiel vorkommenden Wellenlängen λ1, λ2 und λ3, da deren Wellenlängenbereiche sämtlich innerhalb des Reflektionsspektrums des ersten optischen Elements OE1 liegen. Das Ausführungsbeispiel aus Figur 1 zeigt in Kombination mit der Figur 1A, dass das optische Element OE1 für keine der drei Wellenlängen λ1, λ2 oder λ3 durchlässig sein muss. Lediglich die Wellenlänge λ1 der Laserdiode LE1 wird reflektiert.

Die Figur 1 zeigt weiter, dass der Lichtstrahl der Wellenlänge λ1 an dem optischen Element OE2 nicht reflektiert wird. Wie Figur 1A zeigt, liegt die Wellenlänge λ1 außerhalb des reflektierenden Bereiches des optischen Elementes OE2. Die Wellenlänge λ2 liegt innerhalb des Wellenlängenbereiches, in dem das optische Element OE2 reflektierend wirkt. Der Lichtstrahl der Wellenlänge λ2 wird somit am optischen Element OE2 reflektiert. Licht der Wellenlänge λ1 wird am optischen Element OE2 nicht reflektiert und durchdringt das optische Element OE2. Licht der Wellenlänge λ2 wird am optischen Element OE2 reflektiert. Der Wellenlängenbereich, in dem das optische Element OE3 reflektierend wirkt, ist so gebildet, dass lediglich die Wellenlänge λ3, nicht aber die Wellenlängen λ2 oder λ1 reflektiert werden. Licht der Wellenlänge λ2 oder λ1 durchdringt somit das optische Element OE3 und Licht der Wellenlänge λ3 wird am optischen Element OE3 reflektiert.

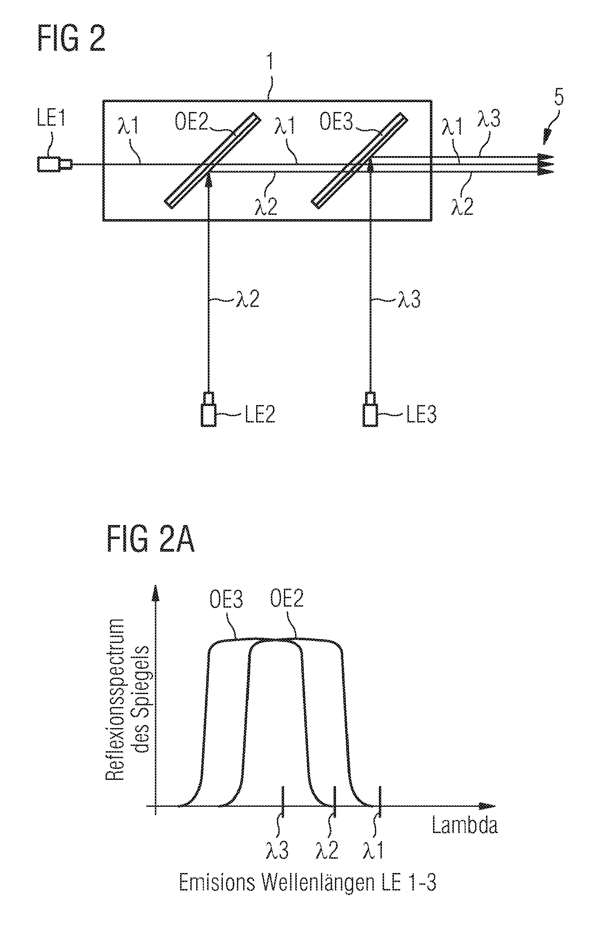

Figur 2 und Figur 2A zeigen ein Ausführungsbeispiel, welches gegenüber dem in Figur 1 dargestellten Ausführungsbeispiel kostengünstiger herstellbar ist. Das Ausführungsbeispiel der Figur 2 weist gegenüber dem Ausführungsbeispiel der Figur 1 ein optisches Element OE weniger auf. Das lediglich als Umlenkspiegel fungierende optische Element OE1 ist gegenüber dem Ausführungsbeispiel der Figur 1 in dem Ausführungsbeispiel der Figur 2 entfallen. Die Laserdiode LE1 ist gegenüber dem Ausführungsbeispiel der Figur 1 nun derart verändert angeordnet, dass der durch das Lichtelement LE1 emittierte Lichtstrahl λ1 aus einer um 45° veränderten Richtung nun direkt auf der Rückseite des optischen Elementes OE2 ohne vorhergehende Umlenkung auftrifft. Damit ist das optische Element OE1 eingespart. Die mit dem optischen Element OE1 verbundenen Material- und Montagekosten bei der Herstellung der optischen Anordnung entfallen somit.

Die Figur 2A zeigt, dass auch mit dem Verzicht auf das Reflektionsspektrum des optischen Elements OE1 mit den optischen Elementen OE2 und OE3 ausreichend Wellenlängenbereiche zur Reflektion vorhanden sind, um die Wellenlängen der Laserdioden LE2 und LE3 an den optischen Elementen OE2 und OE3 zu reflektieren und somit ebenfalls am Ausgang der Lichtadditionsvorrichtung 1 einen durch die drei Lichtstahlen λ1, λ2 und λ3 gebildeten Gesamtlichtstrahl und damit eine Lichtquelle zu erhalten.

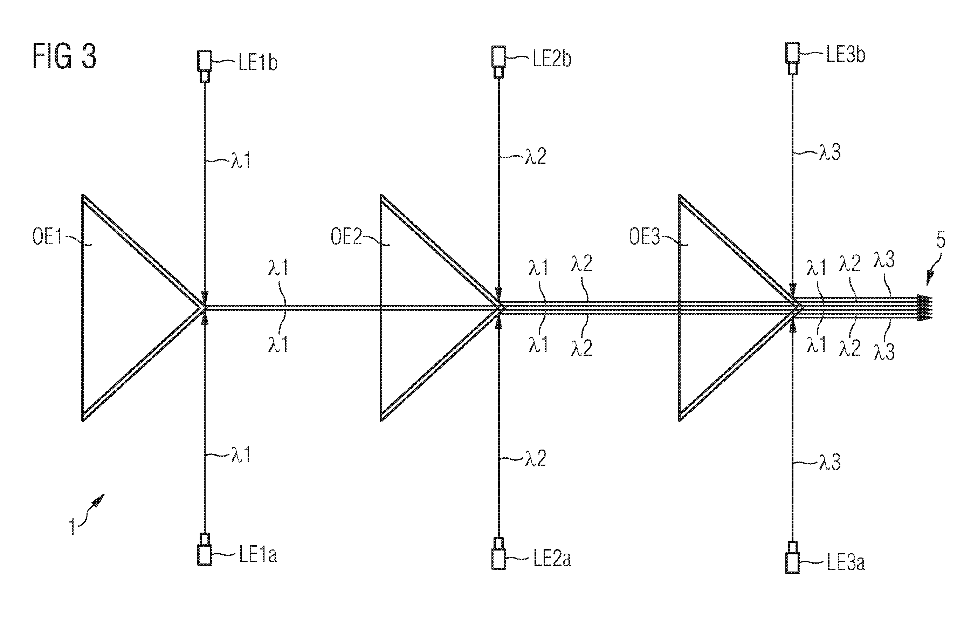

Die Figur 3 zeigt eine Lichtadditionsvorrichtung, welche nunmehr das Licht aus insgesamt sechs Laserdioden LE1a, LE1b, LE2a, LE2b, LE3a und LE3b mit insgesamt drei unterschiedlichen Wellenlängenbereichen λ1 bis λ3 zu einer gemeinsamen Lichtquelle 5 addiert. Diese Lichtadditionsvorrichtung ist aus prismenartigen optischen Elementen OE1, OE2 und OE3 gebildet, wobei die optischen Elemente ebenso wie die optischen Elemente des Ausführungsbeispiels aus Figur 1 oder Figur 2 derart ausgebildet sind, dass sie die jeweiligen Wellenlängen der ihnen zugeordneten lichtemittierenden Elemente LE1, LE2 und LE3 reflektieren. Das Licht der diesen nicht zugeordneten lichtemittierenden Elemente durchdringt die optischen Elemente OE2 oder OE3. Ebenso wie bereits zu den Ausführungsbeispielen der Figuren 1 und 2 erläutert, sind die Oberflächen der optischen Elemente 1 so ausgebildet, dass das durch die Laserdioden LE1a und LE1b emittierte Licht der Wellenlänge λ1 an der Oberfläche des ersten optischen Elements OE1 reflektiert wird. Die Laserdioden sind so angeordnet, dass jeweils aus voneinander verschiedenen Richtungen die Lichtstrahlen der Laserdioden LE1a und LE1b auf die Oberfläche des ersten optischen Elements OE1 auftreffen. Die geometrische Anordnung im Ausführungsbeispiel ist so gebildet, dass die Oberfläche des ersten optischen Elements OE1 in einem Winkel von 45° zu den Lichtstrahlen der Laserdioden geneigt ist. Die Lichtstrahlen werden somit mit einem Winkel von 90° umgelenkt und verlassen das optische Element OE1 in paralleler Richtung.

Die Oberfläche des optischen Elementes OE1 ist so ausgebildet, dass sie exakt die Wellenlänge des Lichtes, welches durch die Laserdiode LE1a und LE1b emittiert wird, reflektiert. Weiter ist das optische Element OE2 so ausgebildet, dass die Wellenlänge λ1 das optische Element OE2 durchdringt. Die Wellenlängen der Laserdioden LE2a und LE2b werden an der Oberfläche des optischen Elementes OE2 reflektiert. Die Lichtstrahlen der Wellenlänge λ1 treffen auf das optische Element OE2 auf und verlassen dieses ohne eine Ablenkung zu erfahren in paralleler Richtung zu den Lichtstrahlen der Laserdioden LE2a und LE2b. Das optische Element OE2 ist mit seinen Oberflächen zu den Laserdioden LE2a und LE2b so ausgerichtet, dass die emittierten Strahlen der Wellenlänge λ2 an dessen Oberfläche reflektiert und in gleicher Richtung zu den Lichtstrahlen der Wellenlänge λ1 das optische Element OE2 verlassen. Die somit gebildete Summe aus den Stahlen λ1 und λ2 der Laserdioden LE1a, LE1b, LE2a und LE2b trifft dann als gemeinsamer Lichtstrahl rückseitig auf das optische Element OE3 auf.

Das optische Element OE3 ist derart ausgebildet, dass es für Licht der Wellenlänge λ1 und λ2 durchlässig wirkt und das Licht der Wellenlänge λ3, welches durch die Laserdioden LE3a und LE3b emittiert wird, an seiner Oberfläche reflektiert. Die Oberflächen des optischen Elements OE3 sind wiederum so ausgebildet, dass der aus den lichtemittierenden Elementen LE3a und LE3b eintreffende Lichtstrahl mit der Wellenlänge λ3 reflektiert wird und gemeinsam mit den Lichtstrahlen λ1 und λ2 das optische Element OE3 in einer gemeinsamen Richtung verlässt. Damit ist am Ende der Lichtadditionsvorrichtung 1 eine Lichtquelle 5 gebildet, welche sich aus den Einzellichtstrahlen λ1, λ2 und λ3 addiert und somit in deren Intensität die Summe der Einzelintensitäten der Lichtstrahlen der Laserdioden LE1a, LE1b, LE2a, LE2b, LE3a und LE3b umfasst.

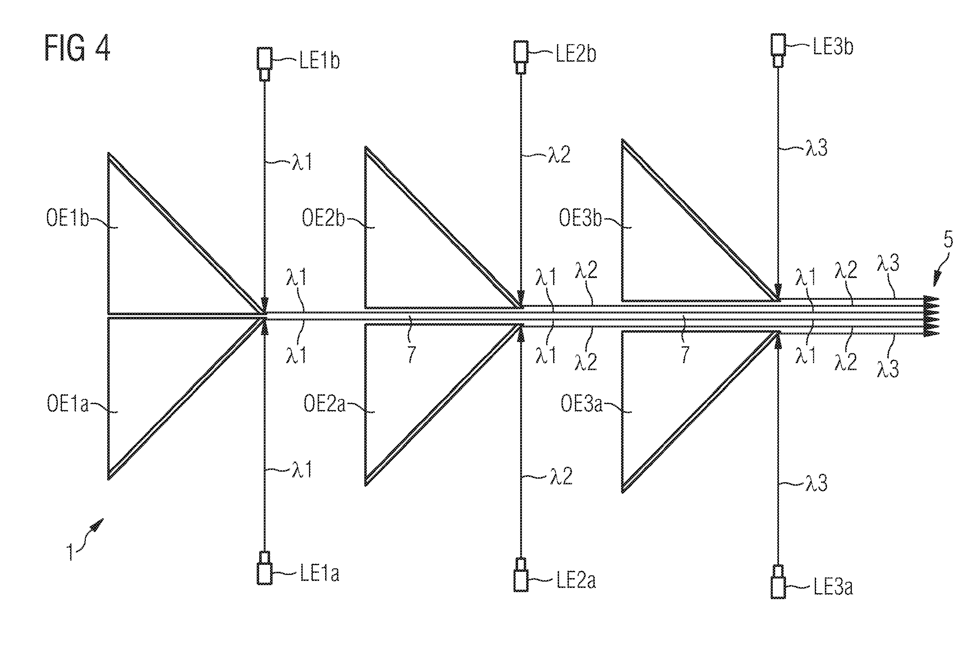

Figur 4 beschreibt ein Ausführungsbeispiel, bei dem die optischen Elemente OE1 bis OE3 eine streu- und absorptionsverlustfreie Durchdringungszone 7 aufweisen, welche dazu eingerichtet ist, die Lichtstrahlen ungehindert passieren zu lassen. Damit sind Absorptionsverluste, die ansonsten beim Durchdringen des optischen Elementes auftreten, vermieden. Im Beispiel ist dies dargestellt durch eine Trennung der optischen Elemente OE1 bis OE3 in optische Elemente OE1a, OE1b sowie OE2a und OE2b sowie OE3a und OE3b. Im Weiteren entspricht das Ausführungsbeispiel der Figur 4 dem Ausführungsbeispiel aus der Figur 3. Das durch die Umlenkung an den reflektierenden Oberflächen gebildete Strahlbündel durchdringt entlang der streu- und absorptionsverlustfreien Durchdringungszone 7 ungehindert und ohne Streu- und Absorptionsverluste die Lichtadditionsvorrichtung. Damit ist die Lichtintensität aufgrund der geringeren Verluste an der Lichtquelle 5 höher als in dem in Figur 3 gezeigten Ausführungsbeispiel.

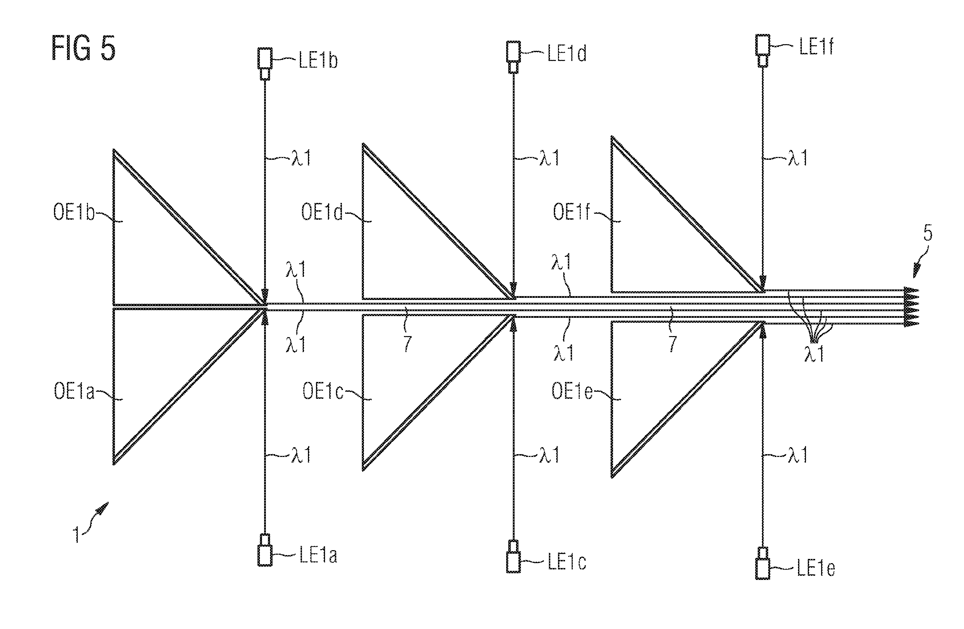

Die Figur 5 zeigt ein Ausführungsbeispiel, bei dem lichtemittierende Elemente LE1a, LE1b, LE1c, LE1d, LE1e und LE1f vorgesehen sind, die allesamt Licht gleicher Wellenlänge λ1 emittieren. Die geometrische Anordnung der optischen Elemente OE1a bis OE1f der Lichtadditionsvorrichtungen 1 des Ausführungsbeispiels der Figur 5 entspricht der Lichtadditionsvorrichtung 1 des in der Figur 4 dargestellten Ausführungsbeispiels. Die Oberfläche der optischen Elemente OE1a, OE1b, OE1c, OE1d, OE1e und OE1f ist auf eine Reflektion der Wellenlänge λ1 ausgelegt. Durch die Bildung einer streu- und absorptionsverlustfreien Durchdringungszone 7 an den einzelnen optischen Elementen OE1a und OE1b sowie OE1c und OE1d sowie OE1e und OE1f ergibt sich ein gemeinsamer Lichtstrahl als Lichtquelle 5, welcher die Lichtintensitäten der einzelnen lichtemittierenden Elemente LE1a, LE1b, LE1c, LE1d, LE1e und LE1f addiert hat und die Wellenlänge λ1 über den gesamten Strahlengang aufweist.

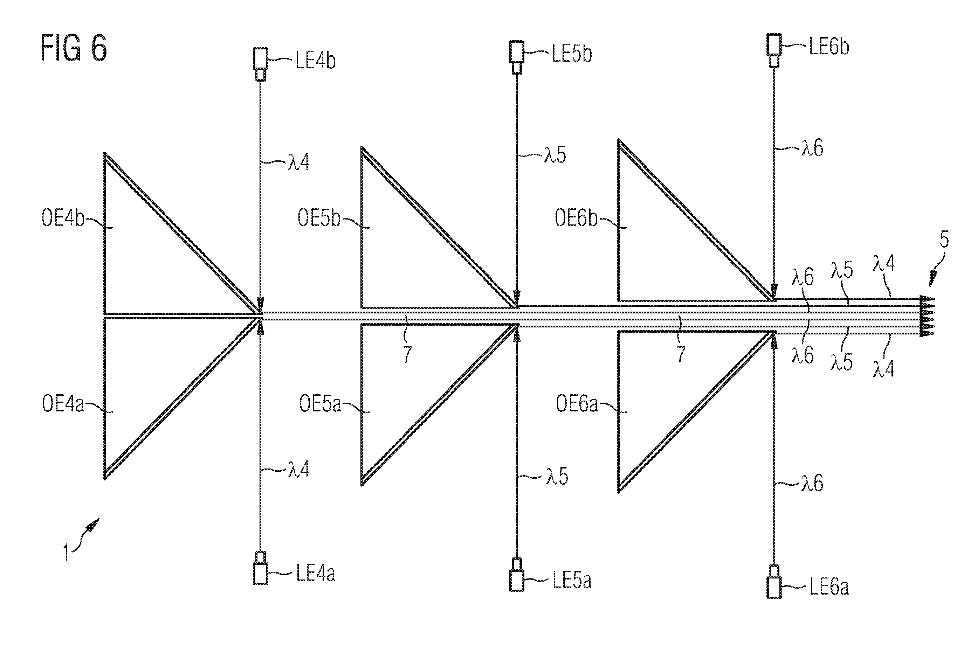

Figur 6 zeigt ein Ausführungsbeispiel, bei dem die Laserdioden LE4a und LE4b nur Licht von roter Laserstrahlung, die Laserdioden LE5a und LE5b Licht von grüner Laserstrahlung und die Laserdioden LE6a und LE6b Licht von blauer Laserstrahlung emittieren. Gemäß der Farbenregel lässt sich durch eine Addition in der Lichtadditionsvorrichtung 1 somit ein Strahlenbündel bilden, welches nicht nur die Intensitäten der einzelnen lichtemittierenden Elemente addiert, sondern auch dessen Farbeindruck durch eine Addition der Farben bewirkt, symbolisiert durch dessen Wellenlängen λ6, λ5 und λ4. Damit ist eine Lichtquelle gebildet, welche durch Mischen der Lichtanteile rot, grün und blau besonders für Projektionsanwendungen geeignet ist.

Die Lichtquelle 5 wird somit eine Lichtquelle mit geringer flächiger Ausdehnung, deren Farbtönung und Farbgebung von weißem Licht bis in jede andere Farbstufe beliebig variierbar ist. Durch Veränderung der Einzelintensitäten der einzelnen Laserdioden LE4a, LE4b, LE5a, LE5b LE6a oder LE6b lässt sich somit ein sehr breites Farbspektrum darstellen. Dies ist von großer Bedeutung für Anwendungen im Bereich der Projektionstechnologie, bei dem auf diese Weise Lichtpunkte beziehungsweise Bildpixel beliebiger Farbe und von hoher Intensität erzeugbar sind.

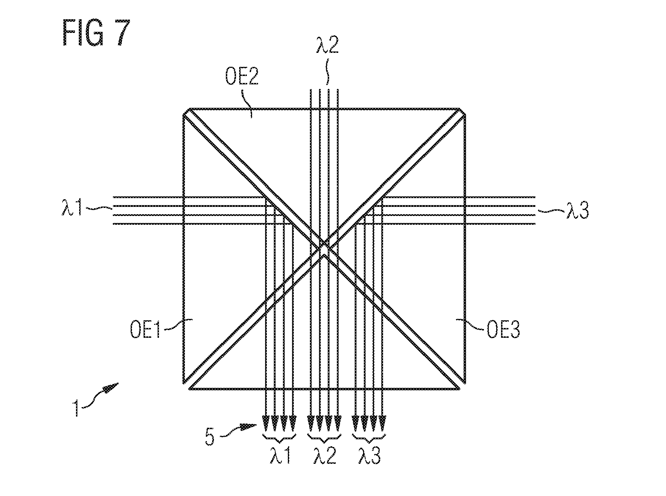

Die Figur 7 zeigt ein Ausführungsbeispiel der Lichtadditionsvorrichtung 1, bei dem die optischen Elemente OE1, OE2 und OE3 zu einem so genannten X-Cube angeordnet sind. Gemäß dem vorhergehend beschriebenen Prinzip sind auch hier die Oberflächen der optischen Elemente OE1, OE2 und OE3 entsprechend reflektierend ausgebildet. Aufgrund der in diesem Ausführungsbeispiel gewählten Anordnung befindet sich die reflektierende Oberfläche zwischen den einzelnen optischen Elementen OE1, OE2 und OE3. Diese sind derart ausgebildet, dass an ihnen Licht einer vorbestimmten Wellenlänge λ1 oder λ3 reflektiert wird. Im dargestellten Beispiel ist zwischen dem optischen Element OE1 und dem optischen Element OE2 eine Grenzfläche gebildet, deren Oberfläche so ausgestaltet ist, dass Licht der Wellenlänge λ1 an ihr reflektiert wird. Durch die Anordnung in dem X-Cube ist die reflektierende Oberfläche in einem 45° Winkel zur Oberfläche der Außenseiten des X-Cube angeordnet. Eine vertikal auf die Außenseiten auftreffende Lichtstrahlung der Wellenlänge λ1 auf das optische Element OE1 wird somit an dieser Grenzfläche reflektiert und verlässt die X-Cube-Anordnung nach einer 90° starken Ablenkung. Gleichermaßen ist an der Grenzfläche der optischen Elemente OE2 und OE3 die Oberfläche derart ausgestaltet, dass ein Licht der Wellenlänge λ3, welches auf das optische Element OE3 von außen eintrifft, reflektiert wird. Die Grenzfläche ist dabei so ausgebildet, dass ein auf das optische Element OE2 auftreffendes Licht der Wellenlänge λ2 die Grenzfläche ungehindert durchdringen kann. Somit ergibt sich ein Gesamtlichtstrahl, welcher in einer Richtung aus den Einzellichtstrahlen der Wellenlängen λ1, λ2 und λ3 gebildet ist, und bildet eine Lichtquelle 5. Das Ausführungsbeispiel zeigt weiter, dass die Lichtstrahlen der Wellenlängen λ1, λ2 und λ3, jeweils hier symbolisch vertreten durch vier Einzellichtstrahlen, zum Beispiel bereits als Ergebnis einer vorgeschalteten Lichtadditionsvorrichtung hier auf den X-Cube geleitet und in diesem ein weiteres Mal miteinander addierbar sind.

Dies zeigt, dass Lichtadditionsvorrichtungen 1 der vorstehend beschriebenen Art beliebig kombinierbar und hintereinander anordenbar sind. Somit ist nicht nur eine hohe Variation an einzelnen Laserdioden kombinierbar und deren Lichtintensitäten addierbar, sondern auch eine vielgestaltige Anwendungsmöglichkeit und Erweiterungsmöglichkeit ist gegeben. Kaskaden von Lichtadditionsvorrichtungen lassen sich somit bilden, wobei Lichtquellen von hoher Intensität durch Addition gebildet werden können.

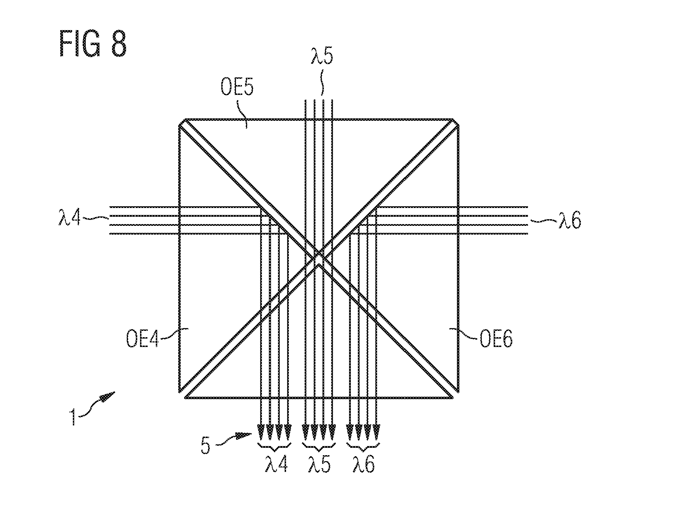

Die Figur 8 zeigt ein Ausführungsbeispiel, bei dem Licht der Wellenlänge für rotes Licht λ4, Licht der Wellenlängen für grünes Licht λ5 und Licht der Wellenlänge für blaues Licht λ6 in einem X-Cube zu einem Gesamtlichtstrahl und einer Lichtquelle 5 addiert und zusammengefasst wird. Das Ausführungsbeispiel der Figur 8 folgt ansonsten dem Prinzip des Ausführungsbeispiels in Figur 7.

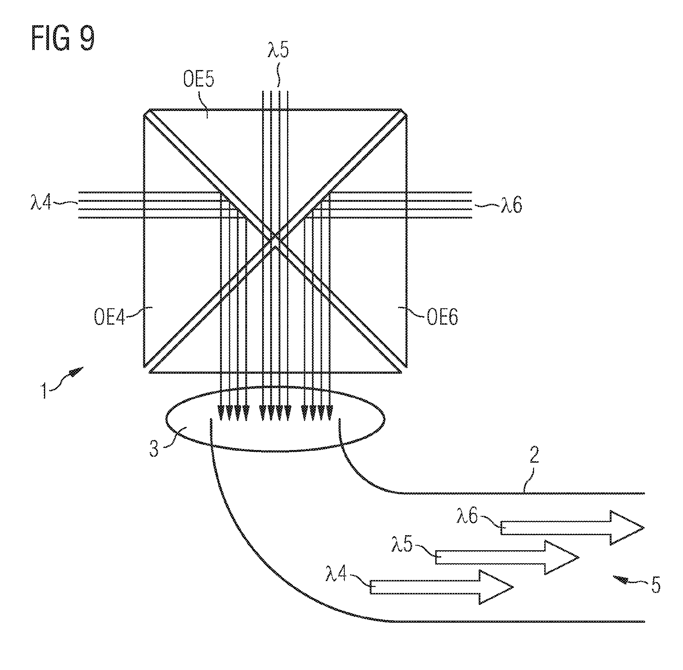

Figur 9 zeigt ein weiteres Ausführungsbeispiel welches eine Weiterbildung des Ausführungsbeispiels aus Figur 8 ist, wobei das aus dem X-Cube austretende Licht der Wellenlängen λ4, λ5 und λ6 mittels einer optischen Linse 3 in eine optische Faser 2 eingeleitet und in dieser an einen beliebigen anderen Ort je nach Länge der Faser weitergeleitet wird. Die Lichtquelle 5 befindet sich dann am Ende der optischen Faser 2. Die optische Faser 2 ist dabei so eingerichtet, dass an deren seitlichen Grenzflächen die Lichtstrahlen der Wellenlängen λ4, λ5 und λ6 vollständig reflektiert werden, so dass ein nahezu verlustfreier Lichtstrahl mit den Wellenlängen λ4, λ5 und λ6 am Ende der optischen Faser austritt. Von besonderer Bedeutung ist dies zum Beispiel für die Bildung von Weißlichtquellen zu Beleuchtungszwecken in den Bereichen der Endoskopie und Mikroskopie, wo eine punktförmige Lichtquelle an zum Teil schwer zugänglichen Orten erforderlich ist, ebenso für Projektionsanwendungen, in denen Rot-, Grün- und Blaulichtquellen hoher Leuchtdichte erzeugt werden sollen. Auch zur Erzeugung von Lichtquellen mit veränderlichen Farbtönungen und hoher Leuchtdichte ist dies von Bedeutung, da die äußeren Abmessungen der einzelnen Lichtquellen, beziehungsweise Laserdioden, und der Lichtadditionsvorrichtung 1 keinerlei Einfluss auf den entfernten Punkt der Lichtquelle 5 haben.

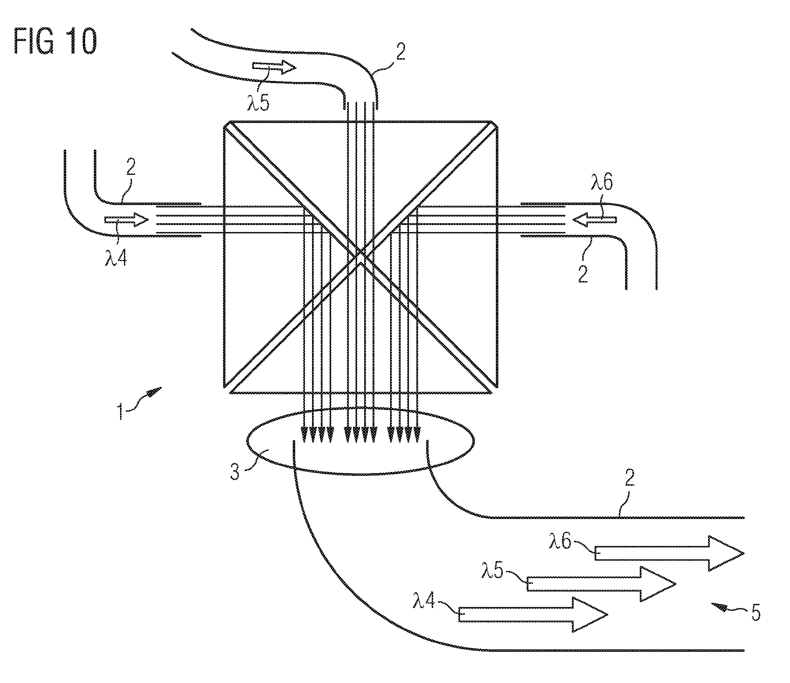

Das Ausführungsbeispiel der Figur 10 zeigt eine Variante, bei der die Lichtstrahlen der Wellenlängen λ4, λ5 oder λ6 oder auch beliebige andere Wellenlängen mittels einer optischen Faser in die Lichtadditionsvorrichtung einspeisbar sind. Dies ist nicht nur, auf die Anordnung gemäß einem X-Cube beschränkt, sondern im Prinzip auch auf alle anderen Anordnungen, wie in den Figuren 1 bis 9 gezeigt, anwendbar.

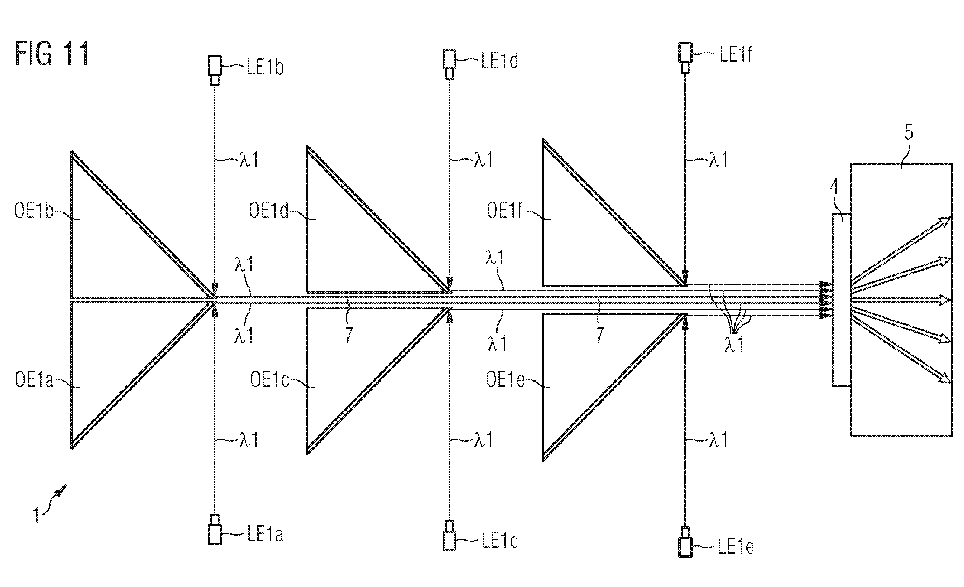

Figur 11 bildet die in Figur 5 bereits beschriebene Anordnung dahingehend weiter, dass der aus der Lichtadditionsvorrichtung 1 austretende Lichtstrahl der Wellenlänge λ1 auf eine Konvertereinrichtung 4 trifft, wobei die Konvertereinrichtung 4 die Wellenlänge des auftreffenden Lichtes wandelt. So kann zum Beispiel in dem gezeigten Ausführungsbeispiel eine Laserstrahlung von 445 nm bis 470 nm in Verbindung mit einem Cer-dotierten YAG-Konverter, welcher beispielsweise auf Glas oder Kunststoff oder Silikat aufgebracht ist oder in dieses eingebettet ist, zu einer Weißlichtquelle kombiniert werden.

Die Abkürzung CER steht dabei für Cerium und beschreibt somit ein Cerium-dotiertes Konvertermaterial, die Abkürzung YAG steht für Yttrium Aluminium Granulatkristall. Somit ist mit Cer-dotiertem YAG-Konverter ein Cerium-dotiertes Yttrium-Aluminium-Granulat-Kristall beschrieben.

Alternativ dazu ist als Konvertermaterial Europium basiertes Material verwendbar, womit zum Beispiel mit Lasern mit Wellenlängen von 370 nm bis 400 nm eine Rot-, Grün- oder Blaukonversion zu erreichen ist und damit durch deren Kombination eine Weißlichtquelle erzeugbar ist.

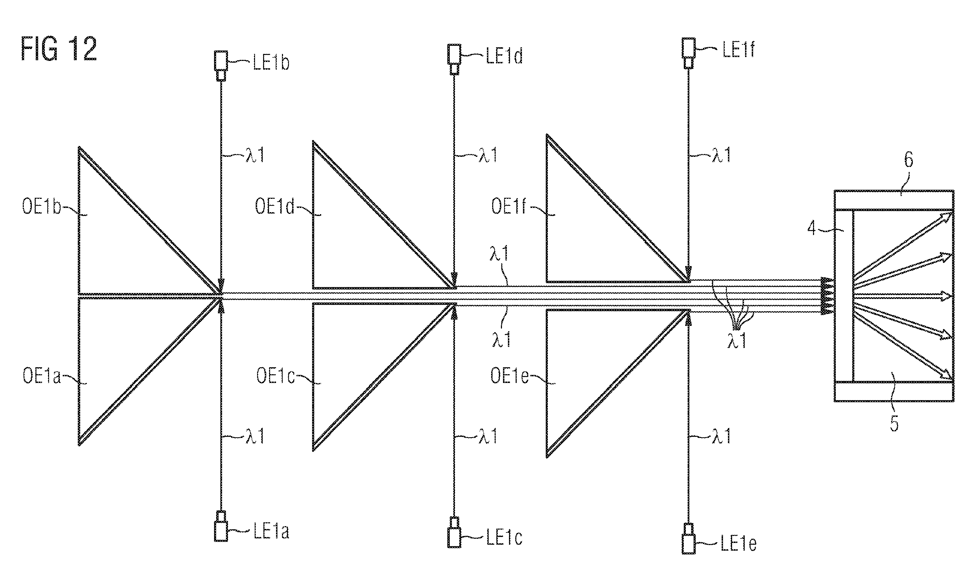

Figur 12 bildet das Ausführungsbeispiel der Figur 11 dahingehend weiter, dass die an der Konvertereinrichtung 4 durch die Konversion bedingte Wärmeentwicklung durch eine Kühlvorrichtung 6 ableitbar ist. Die Kühlvorrichtung 6 ist beispielsweise ein mit Wasser oder einem anderen Kühlmedium durchflossenes Kühlbauteil oder ein Kühlelement mit hoher Wärmeleitfähigkeit wie zum Beispiel eine Metallummantelung. Im Weiteren entspricht das Ausführungsbeispiel aus der Figur 12 dem bereits zu Figur 11 beschriebenen Ausführungsbeispiel.

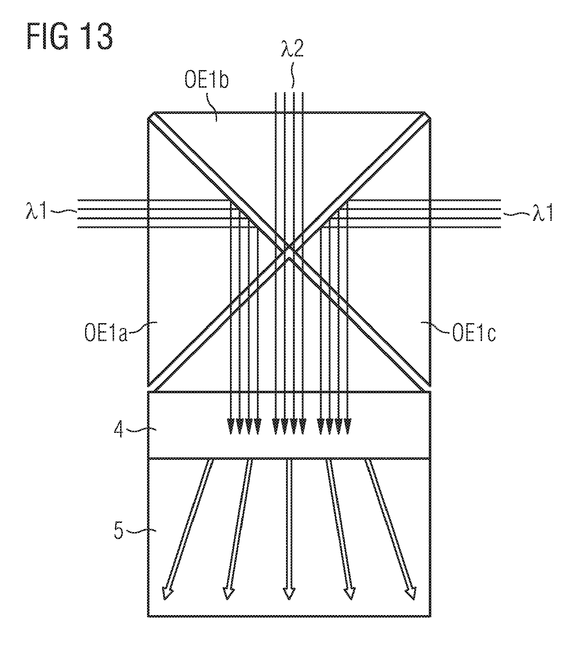

Das Ausführungsbeispiel der Figur 13 zeigt eine weitere Variante, bei der die Konvertereinrichtung 4 unmittelbar an dem Strahlenausgang des so genannten X-Cube angeordnet ist, und dort unmittelbar die Wellenlängen der am X-Cube austretenden Lichtstrahlen konvertiert.

Somit lassen sich für die verschiedensten Verwendungen geeignete Ausführungsbeispiele finden, um jeweils zu einer Lichtquelle zu gelangen, deren flächige Ausdehnung sehr gering ist und deren Leuchtdichte sehr hoch ist.

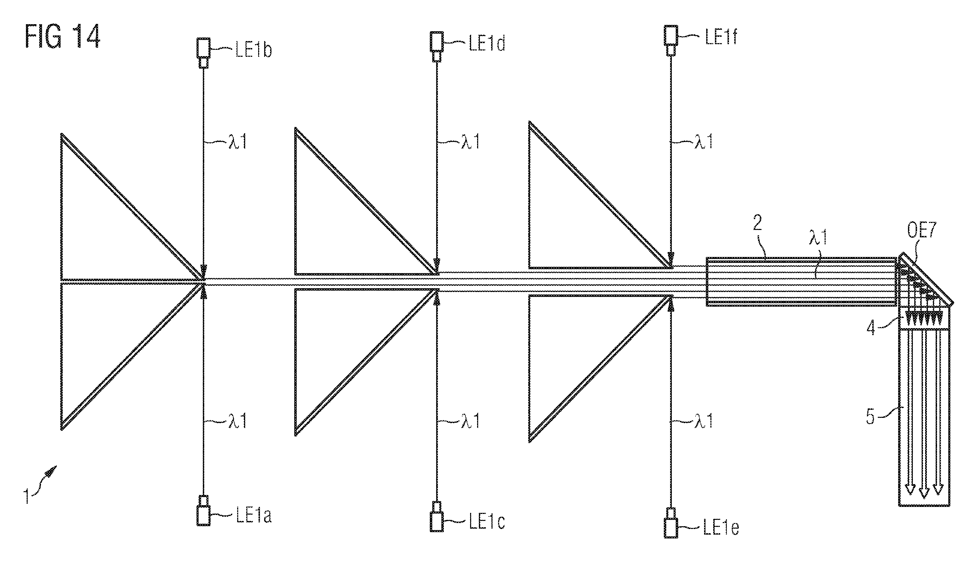

So zeigt das Ausführungsbeispiel der Figur 14 eine weitere Ausführungsform mit sechs Laserdioden LE1a bis LE1f, deren Lichtstrahlen mittels der Lichtadditionsvorrichtung 1 addiert werden und der optischen Faser 2 zugeführt werden. Am Ende der optischen Faser 2 ist ein optisches Element OE7 angeordnet, welches ein Umlenkprisma darstellt. Am Strahlenausgang des optischen Elements OE7 ist mittels der Konvertereinrichtung 4 eine Lichtquelle 5 gebildet, welche in Abhängigkeit des Konvertermaterials im Zusammenspiel mit den Wellenlängen des durch die Laserdioden emittierten Lichts eine Lichtquelle geringer flächiger Ausdehnung und eine vorbestimmbare Farbtönung aufweist.

Auch wenn in den vorstehend beschriebenen Ausführungsbeispielen Laserdioden als lichtemittierende Elemente Verwendung finden, so ist der Erfindungsgedanke damit nicht ausschließlich auf Laserdioden eingeschränkt.

Vielmehr eignen sich auch andere lichtemittierende Elemente. Die Verwendung von Laserdioden ist aufgrund von deren Leuchtdichte und parallel gerichteter Lichtemission besonders geeignet.

So sind mit Leuchtdioden ebenfalls Lichtquellen geringer flächiger Ausdehnung erzeugbar, deren Leuchtdichte ist jedoch sehr gering, beziehungsweise stark begrenzt. Mit InGaN basierten LEDs, die auf Anordnung in Chipgröße eine Abstrahlfläche von etwa 1 mm x 1 mm aufweisen können, ist eine optische Leistungsdichte von cirka 0,1 kW/cm² erreicht. Durch eine kaskadenartige Anordnung von Lichtadditionsvorrichtungen ist mittels einer Vielzahl von derartigen Leuchtdioden auch eine hohe Leuchtdichte zu erreichen.

Alternativ zu Leuchtdioden ist mit laserbasierten Lichtquellen wie zum Beispiel InGaN basierten Lasern eine höhere optische Ausgangsleistung an jedem einzelnen lichtemittierenden Element zu erreichen. Die InGaN basierten Laser sind mit einer optisch emittierenden Fläche von 1 µm bis 20 µm x 0,3 µm deutlich kleiner als einfache Leuchtdioden und erreichen somit eine optische Ausgangsleistungsdichte von bis zu 40000 kW/cm². Mit zunehmender optischer Leistung steigt die Gefahr, dass die Laserdiode, insbesondere die Facette des Lasers, Schaden nimmt. Mittels der Lichtadditionsvorrichtung lassen sich einzelne Ausgangsleistungen mehrerer Laserdioden ohne das Risiko der Zerstörung der Facette einer Laserdiode zu einer Lichtquelle zusammenfassen, deren Lichtleistung deutlich größer ist als die Lichtleistung einzelner Laserdioden. Eine kaskadenartige Anordnung von Lichtadditionsvorrichtungen steigert die möglichen Leuchtdichten der erzeugbaren Lichtquellen um ein Weiteres.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder Ausführungsbeispielen angegeben ist.

Diese Patentanmeldung beansprucht die Priorität der deutschen Patentanmeldung 102007009820.2, deren Offenbarungsgehalt hiermit durch Rückbezug aufgenommen wird.

## Patentansprüche

1. Optische Anordnung mit zumindest einem ersten lichtemittierenden Element (LE1) und einem zweiten lichtemittierenden Element (LE2), mit zumindest einer Lichtadditionsvorrichtung (1) derart angeordnet, dass das Licht des ersten und des zweiten lichtemittierenden Elementes (LE1,LE2) zu einem Lichtstrahl addiert wird.

2. Optische Anordnung nach Patentanspruch 1,
**dadurch gekennzeichnet, dass**
das erste lichtemittierende Element (LE1) und das zweite lichtemittierende Element (LE2) aus einer ersten halbleiterbasierten Laserdiode (LE1) und einer zweiten halbleiterbasierten Laserdiode (LE2) gebildet sind.

3. Optische Anordnung nach einem der vorhergehenden Patentansprüche,
**dadurch gekennzeichnet, dass**
das erste lichtemittierende Element (LE1) Licht eines ersten vorbestimmten Wellenlängenbereiches (λ1) emittiert und
das zweite lichtemittierende Element (LE2) Licht eines zweiten vorbestimmten Wellenlängenbereichs (λ2) emittiert.

4. Optische Anordnung nach einem der vorhergehenden Patentansprüche,
**dadurch gekennzeichnet, dass**
eine Konvertereinrichtung (4) vorgesehen ist.

5. Optische Anordnung nach Patentanspruch 4,
**dadurch gekennzeichnet, dass**
die Konvertereinrichtung (4) der Lichtadditionsvorrichtung (1) nachgeschaltet ist.

6. Optische Anordnung nach einem der vorhergehenden Patentansprüche,
**dadurch gekennzeichnet, dass**
zumindest eine optische Faser (2) vorgesehen ist.

7. Optische Anordnung nach Patentanspruch 6,
**dadurch gekennzeichnet, dass**
die optische Faser (2) der Lichtadditionsvorrichtung nachgeschaltet ist.

8. Optische Anordnung nach einem der vorhergehenden Patentansprüche,
**dadurch gekennzeichnet, dass**
die Lichtadditionsvorrichtung (1) gebildet ist aus zumindest einem optischen Element (OE) mit einer Grenzfläche, wobei die Grenzfläche derart ausgebildet ist, dass ein in einem vorbestimmten Winkel auftreffendes Licht eines vorbestimmten Wellenlängenbereichs (λ) an der Grenzfläche reflektiert wird und Licht außerhalb dieses vorbestimmten Wellenlängebereichs (λ) die Grenzfläche durchdringt.

9. Optische Anordnung nach einem der vorhergehenden Patentansprüche,
**dadurch gekennzeichnet, dass**
die Konvertereinrichtung (4) mit einer Kühlvorrichtung (6) thermisch gekoppelt ist.

10. Optisches Verfahren,
bei dem Licht eines ersten lichtemittierenden Elements (LE1) mit dem Licht eines zweiten lichtemittierenden Elements (LE2) zu einem Lichtstrahl addiert wird.

11. Optisches Verfahren nach Patentanspruch 10,
**dadurch gekennzeichnet, dass**
das erste lichtemittierende Element (LE1) einen ersten Einzellichtstrahl und das zweite lichtemittierende Element (LE2) einen zweiten Einzellichtstrahl emittiert.

12. Optisches Verfahren nach einem der Patentansprüche 10 bis 11,
**dadurch gekennzeichnet, dass**
das der erste Einzellichtstrahl einen ersten vorbestimmten Wellenlängenbereich (λ1) umfasst und
der zweite Einzellichtstrahl einen zweiten vorbestimmten Wellenlängenbereich umfasst.

13. Optisches Verfahren nach einem der Patentansprüche 10 bis 12,
**dadurch gekennzeichnet, dass**
der Wellenlängenbereich (λ) des Lichtstrahls konvertiert wird.

14. Optisches Verfahren nach einem der Patentansprüche 10 bis 13,
**dadurch gekennzeichnet, dass**
das Licht mittels einer optischen Faser von zumindest einem der lichtemittierenden Elemente der Addition zugeführt wird, und/oder der Lichtstrahl mittels einer optischen Faser an einen beabstandeten Ort geleitet wird.

15. Optisches Verfahren nach einem der Patentansprüche 10 bis 14,
**dadurch gekennzeichnet, dass**
der erste Einzellichtstrahl und der zweite Einzellichtstrahl aus voneinander abweichenden Richtungen einem optischen Element (OE) zugeführt werden, und an dem optischen Element (OE) an einer Grenzfläche der erste Einzellichtstrahl die Grenzfläche durchdringt, und der zweite Einzellichtstrahl an der Grenzfläche reflektiert wird, wobei der erste und der zweite Einzellichtstrahl die Grenzfläche in einem gemeinsamen Lichtstrahl verlassen.

16. Optisches Verfahren nach einem der Patentansprüche 10 bis 15,
**dadurch gekennzeichnet, dass**
eine durch die Konvertierung gebildete Wärme abgeleitet wird.
